# EUROPÄISCHE PATENTSCHRIFT

(11) **EP 1 582 786 B1**
(45) Veröffentlichungstag und Bekanntmachung des Hinweises auf die Patenterteilung: **11.03.2009**
(21) Anmeldenummer: 05001289.7
(22) Anmeldetag: 22.01.2005
(51) Int. Cl.: F16J 15/32

(54) **Dichtring**
Sealing ring
Joint annulaire d'étanchéité

(30) Priorität: 30.03.2004 DE 102004016039
(43) Veröffentlichungstag der Anmeldung: 05.10.2005
(73) Patentinhaber: Carl Freudenberg KG, 69469 Weinheim (DE)
(72) Erfinder: Baudry, Alain, 52360 Neuilly (FR); Bour, Bruno, 52600 Montlandon (FR)

(56) Entgegenhaltungen:
- EP-A- 1 256 748
- DE-C- 917 942
- FR-A- 1 386 002
- US-A- 3 989 259
- US-A- 5 380 015
- US-B1- 6 513 810

## Beschreibung

### Technisches Gebiet

Die Erfindung betrifft einen Dichtring.

### Stand der Technik

Ein Dichtring ist aus der DE 917 942 C bekannt. Der vorbekannte Dichtring umfasst einen Stützkörper und eine Dichtlippe, die durch ein Haftteil mit dem Stützkörper verbunden ist. Die Dichtlippe umschließt ein abzudichtendes Maschinenelement dichtend. Der Stützkörper weist einen Axialflansch auf, der im Wesentlichen zylindrisch ausgebildet ist und sich in axialer Richtung parallel zur Einpress- und Ausbaurichtung des Dichtrings erstreckt und außenumfangsseitig zumindest eine Erhebung aufweist, mit zumindest einer sich im Wesentlichen quer zur Einpress- und Ausbaurichtung erstreckenden Stützfläche, wobei die Erhebung von einer als statische Dichtung ausgebildeten Ummantelung umschlossen ist. In axialer Richtung des Dichtrings betrachtet, sind zwei sich in Umfangsrichtung erstreckende Reihen mit jeweils einer Erhebung auf dem Axialflansch angeordnet, wobei die beiden Reihen einander mit axialem Abstand benachbart zugeordnet sind. Jede Reihe ist entlang jeweils einer Umfangslinie angeordnet.

Der Vorteil des vorbekannten Dichtrings wird darin gesehen, dass die Dichtlippe und die Ummantelung aus voneinander abweichenden Dichtungswerkstoffen bestehen können und dass der vorbekannte Dichtring dadurch gut an die jeweiligen Gegebenheiten des Anwendungsfalls angepasst werden kann. Der Axialflansch des Stützkörpers ist bei dem vorbekannten Dichtring, im dargestellten Schnitt betrachtet, an mehreren Stellen gekröpft oder bogenförmig ausgebildet, um dadurch eine größere Oberfläche zu erzielen und daraus resultierend eine größere Haftfestigkeit zwischen dem Stützkörper und der Ummantelung, um vor allem die Gefahr eines Wegschiebens der Ummantelung beim Einpressen des Dichtrings in das Maschinengehäuse auf ein Minimum zu reduzieren.

Aus der EP 0 297 166 A1 ist ein Dichtring bekannt, umfassend einen Stützkörper und einen Dichtkörper, wobei der Stützkörper einen Axialflansch umfasst, der, in axialer Richtung des Dichtrings betrachtet, nur teilweise von einer Ummantelung aus elastomerem Werkstoff umschlossen ist. Die Ummantelung ist als statische Dichtung ausgebildet. Der Axialflansch ist im Bereich der Ummantelung, in Umfangsrichtung betrachtet, wellenförmig ausgebildet, wobei sich die Wellenkämme und -täler parallel zur Einpress- und Ausbaurichtung des Dichtrings erstrecken.

### Darstellung der Erfindung

Der Erfindung liegt die Aufgabe zugrunde, einen Dichtring der eingangs genannten Art derart weiterzuentwickeln, dass beim Einpressen des Dichtrings in den dafür vorgesehenen Einbauraum und beim Ausbau des Dichtrings aus dem Einbauraum die außenumfangsseitige Ummantelung des Axialflanschs mit dem Axialflansch selbst wesentlich haltbarer verbunden ist; ein Ablösen der Ummantelung vom Axialflansch soll zuverlässig vermieden werden.

Diese Aufgabe wird erfindungsgemäß mit den Merkmalen von Anspruch 1 gelöst. Auf vorteilhafte Ausgestaltungen nehmen die auf Anspruch 1 rückbezogenen Ansprüche Bezug.

Zur Lösung der Aufgabe ist ein Dichtring vorgesehen, umfassend einen Stützkörper und eine Dichtmanschette, die ein abzudichtendes Maschinenelement dichtend umschließt, wobei der Stützkörper und die Dichtmanschette miteinander verbunden sind, wobei der Stützkörper einen Axialflansch umfasst, wobei der Axialflansch im Wesentlichen zylindrisch ausgebildet ist und sich in axialer Richtung parallel zur Einpress- und Ausbaurichtung des Dichtrings erstreckt und außenumfangsseitig zumindest eine Erhebung aufweist, mit zumindest einer sich im Wesentlichen quer zur Einpress- und Ausbaurichtung erstreckenden Stützfläche und wobei die Erhebung von einer als statische Dichtung ausgebildeten Ummantelung umschlossen ist, wobei, in axialer Richtung des Dichtrings betrachtet, zumindest zwei sich in Umfangsrichtung erstreckende Reihen mit jeweils zumindest einer Erhebung auf dem Axialflansch angeordnet sind, wobei die beiden Reihen einander mit axialem Abstand benachbart zugeordnet sind und wobei jede Reihe entlang jeweils einer Umfangslinie angeordnet ist, wobei in jeder Reihe mehrere in Umfangsrichtung benachbart zueinander angeordnete Erhebungen vorgesehen sind und wobei die Erhebungen der ersten und zweiten Reihe, im Umfangsrichtung des Axialflanschs betrachtet, einander auf Lücke zugeordnet sind. Die statische Dichtung besteht aus einem geeigneten Dichtungswerkstoff, beispielsweise aus einem elastomeren oder polymeren Werkstoff.

Durch die sich im Wesentlichen quer zur Einpress- und Ausbaurichtung erstreckende Stützfläche wird die Ummantelung, die die statische Dichtung bildet, während der Montage oder Demontage des Dichtrings gestützt. Scherkräfte, die während der Montage oder Demontage auf die Ummantelung und die Trennfuge zwischen Axialflansch und Ummantelung wirken, wirken bei dem beanspruchten Dichtring nicht auf die sich parallel zur Einpress- und Ausbaurichtung erstreckenden Trennflächen von Axialflansch und Ummantelung sondern im Wesentlichen senkrecht auf die abstützende Stützfläche. Die Gefahr, dass sich die Ummantelung während der Montage/Demontage des Dichtrings vom Axialflansch ablöst, ist durch die Stützfläche, die sich quer zur Einpress- und Ausbaurichtung des Dichtrings erstreckt, auf ein Minimum reduziert.

Um eine weiter verbesserte Abstützung der Ummantelung am Axialflansch und dadurch eine verbesserte Haltbarkeit während der Montage und Demontage des Dichtrings zu erhalten, ist es vorgesehen, dass, in axialer Richtung des Dichtrings betrachtet, zumindest zwei sich in Umfangsrichtung erstreckende Reihen von Erhebungen auf dem Axialflansch angeordnet sind, wobei die beiden Reihen einander mit axialem Abstand benachbart angeordnet sind und wobei jede Reihe entlang einer Umfangslinie angeordnet ist. Durch die zweireihige Ausführung der Erhebungen können größere Kräfte aufgenommen werden, als bei einreihiger Ausführung; die gute "Verzahnung" von Ummantelung und Axialflansch bewirkt eine ausgezeichnete Haltbarkeit dieser Teile aneinander. Die Zuordnung der Erhebungen einer jeden Reihe, bezogen auf die andere Reihe auf Lücke, begünstigt diese vorteilhaften Gebrauchseigenschaften. Die Aufnahme axialer Kräfte, die bei Montage und Demontage des Dichtrings in eine Gehäusebohrung auf die Verbindung zwischen Ummantelung und Axialflansch wirken, wird dadurch weiter begünstigt. Die beiden Reihen können einander, gemäß einer anderen Ausgestaltung, ohne axialen Abstand benachbart zugeordnet sein.

Nach einer vorteilhaften Ausgestaltung kann es vorgesehen sein, dass die Ummantelung eine axiale Erstreckung aufweist, die der axialen Erstreckung des Axialflanschs entspricht und diesen in axialer Richtung vollständig überdeckt. Auch eine solche Ausgestaltung trägt zur Lösung der gestellten Aufgabe bei, weil die Kontaktfläche zwischen Axialflansch und Ummantelung besonders groß und die Haftung von Ummantelung und Axialflansch aneinander deshalb besonders gut ist.

Der Axialflansch kann mehrere, gleichmäßig in Umfangsrichtung verteilt angeordnete Erhebungen aufweisen. Zusätzlich zu den Stützflächen quer zur Einpress- und Ausbaurichtung weisen die Erhebungen jeweils zwei in Umfangsrichtung des Dichtrings benachbart zueinander angeordnete, sich parallel zur Einpress- und Ausbaurichtung erstreckende Stirnflächen auf, wobei einander benachbarte Stirnflächen benachbarter Erhebungen eine Lücke zwischen den Erhebungen begrenzen. Die abwechselnde Anordnung von Erhebung und Lücke in Umfangsrichtung bewirkt eine vergleichsweise große Kontaktfläche zwischen dem Axialflansch und der Ummantelung, so dass durch die feste Verbindung zwischen Axialflansch und Ummantelung eine gegenseitige Trennung der Teile auch bei sehr harten Montagebedingungen nicht zu befürchten ist. Durch eine solche Ausgestaltung ergibt sich eine große Tragfähigkeit im Hinblick auf die rotationssymmetrische Gestaltung des Stützkörpers. Große axiale Lasten, wie sie beispielsweise bei einem tiefen Einpressen des Dichtrings in eine aufnehmende Gehäusebohrung entstehen und große Lasten in Umfangsrichtung des Dichtrings, haben bei einer solchen Ausgestaltung keinen nachteiligen Einfluss auf die Verbindung zwischen Axialflansch und Ummantelung und somit auf die Haltbarkeit des Dichtrings.

Die Erhebungen können in zumindest einer ersten Reihe entlang einer Umfangslinie angeordnet sein. Ein solcher Dichtring kann mit geringen Abmessungen in axialer Richtung realisiert werden.

Die Erhebungen können, in der Draufsicht des Dichtrings betrachtet, im Wesentlichen rechteckig ausgebildet sein und zwei einander in Einpress- und Ausbaurichtung gegenüberliegend angeordnete Stirnseiten aufweisen, die jeweils als Stützfläche für die Ummantelung ausgebildet sind. Derartige quader- oder würfelförmige Erhebungen sind vergleichsweise einfach und kostengünstig herstellbar. Durch die sich in radialer Richtung erstreckenden Stütz- und Stirnflächen quer und parallel zur Einpress- und Ausbaurichtung, ergibt sich eine besonders große Kontaktfläche und dadurch eine besonders effiziente und haltbare Abstützung der Ummantelung am Axialflansch.

Der Stützkörper besteht bevorzugt aus einem polymeren Werkstoff. Bezogen auf die Dichtmanschette besteht der Stützkörper aus einem zähharten Werkstoff. Die polymeren Werkstoffe, die zur Anwendung gelangen können, sind abhängig von den Belastungen, die auf den Stützkörper wirken. Die Werkstoffe können faserverstärkt sein. Durch die Faserverstärkung wird die mechanische Widerstandsfähigkeit erhöht.

Die Dichtmanschette kann beispielsweise aus einem PTFE-Compound bestehen.
Die Dichtmanschette kann auf der dem Maschinenelement radial zugewandten Seite einen Rückförderdrall zur Rückförderung von abzudichtendem Medium in Richtung des abzudichtenden Raums aufweisen, wobei die Dichtmanschette, in Abhängigkeit vom jeweiligen Anwendungsfall, in Richtung oder entgegen der Richtung des abzudichtenden Raums vorgewölbt ist. Eine derart gestaltete Dichtmanschette aus einem PTFE-Compound weist gleich bleibend gute Gebrauchseigenschaften während einer sehr langen Gebrauchsdauer auf.

Die Dichtmanschette kann aber auch aus einem ein- oder mehrlagigen Vliesstoff bestehen, der latexgebunden oder mit einer PTFE-Dispersion imprägniert ist. Weiterhin kann die Dichtmanschette aus einem duoplastischen oder thermoplastischen Kunststoff bestehen, der ausreichend elastisch verformbar und abriebbeständig ist.

Um eine gute Verbindung der Dichtmanschette am Stützkörper zu erreichen, kann der Stützkörper einen Radialflansch aufweisen, der einstückig ineinander übergehend und materialeinheitlich mit dem Axialflansch ausgebildet ist, wobei der Radialflansch bevorzugt die Außenumfangsfläche der Dichtmanschette klammerartig umschließt.

### Kurzbeschreibung der Zeichnung

Ein Ausführungsbeispiel des erfindungsgemäßen Dichtrings wird nachfolgend anhand der Figuren 1 bis 4 näher erläutert.

Diese zeigen jeweils in schematischer Darstellung:
- Figur 1: einen Längsschnitt durch eine Dichtungsanordnung, umfassend einen erfindungsgemäßen Dichtring, der entlang der Linie A-A aus Figur 3 geschnitten ist,
- Figur 2: eine Dichtungsanordnung, wie in Figur 1, wobei der Dichtring entlang der Linie B-B aus Figur 3 geschnitten ist,
- Figur 3: einen Dichtring gemäß den Figuren 1 und 2 in der Seitenansicht,
- Figur 4: eine perspektivische Darstellung des Stützkörpers und der Dichtmanschette, die miteinander verbunden sind, ohne die Ummantelung, die die statische Dichtung bildet.

### Ausführung der Erfindung

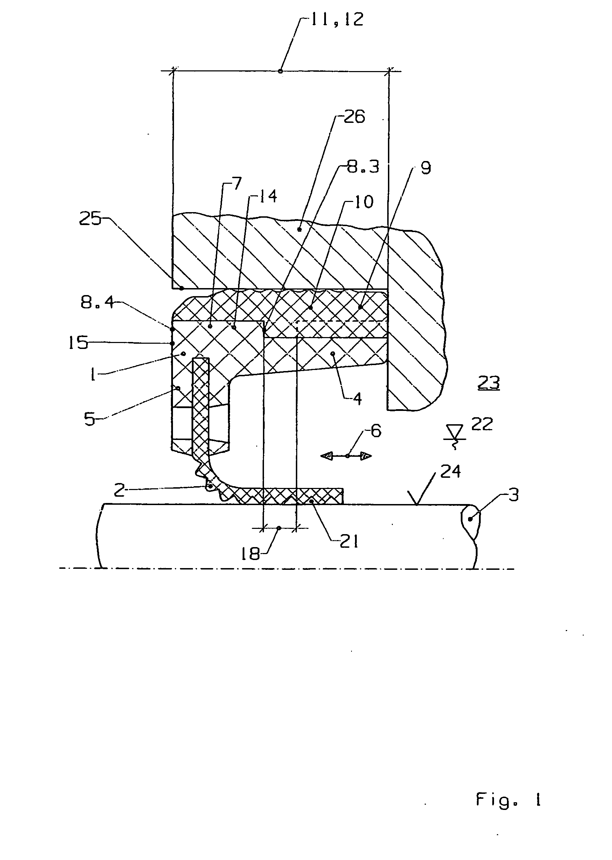

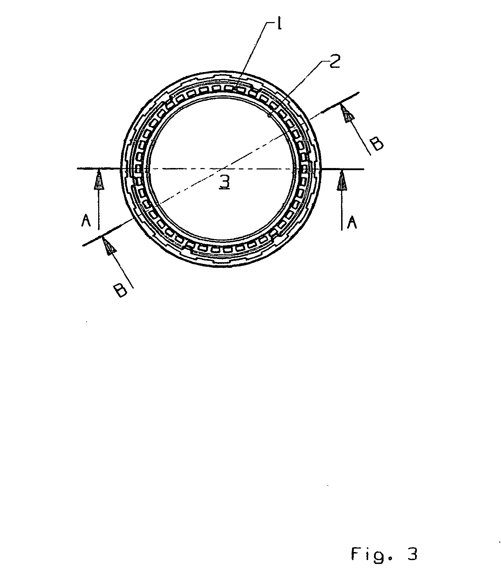

In Figur 1 ist ein Ausführungsbeispiel einer Dichtungsanordnung in längs geschnittener Darstellung gezeigt. Der Dichtring ist entlang der Linie A-A aus Figur 3 geschnitten dargestellt.

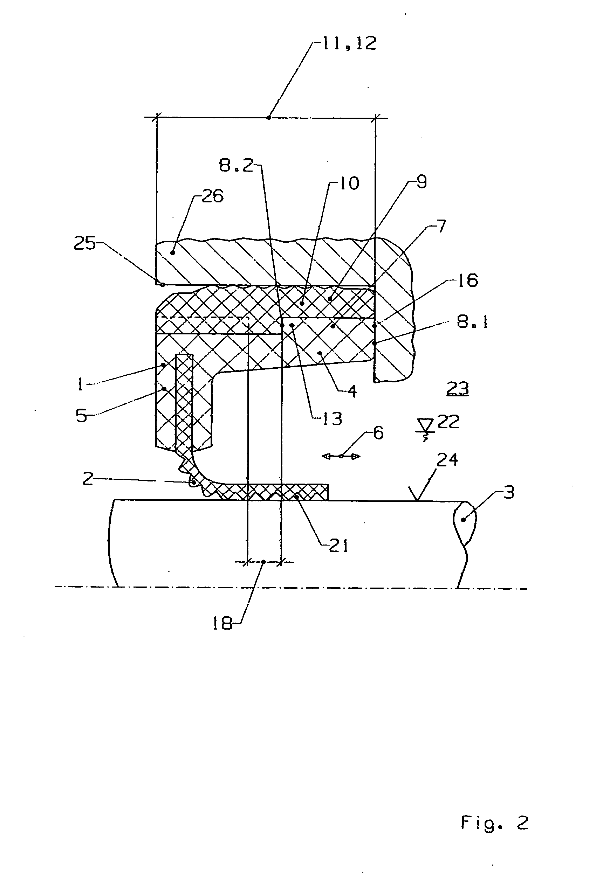

In Figur 2 ist die Dichtungsanordnung aus Figur 1 gezeigt, wobei der Dichtring entlang der Linie B-B aus Figur 3 geschnitten ist.

Der Dichtring aus den Figuren 1 und 2 umfasst einen Stützkörper 1, der aus einem zähharten, polymeren Werkstoff besteht. Mit dem Stützkörper 1 ist eine Dichtmanschette 2 verbunden, die aus einem Dichtungswerkstoff, in den hier gezeigten Ausführungsbeispielen aus einem PTFE-Compound, besteht.
Das abzudichtende Maschinenelement 3 wird in den hier gezeigten Ausführungsbeispielen durch eine Welle gebildet, wobei die Dichtmanschette 2 die abzudichtende Oberfläche 24 des abzudichtenden Maschinenelements 3 unter radialer Vorspannung dichtend umschließt. Auf der dem Maschinenelement 3 radial zugewandten Seite ist die Dichtmanschette 2 mit einem gewindeförmigen Rückförderdrall 21 versehen, zur Rückförderung von abzudichtendem Medium 22 in Richtung des abzudichtenden Raums 23.
In den hier gezeigten Ausführungsbeispielen ist die Dichtmanschette 2 in Richtung des abzudichtenden Raums 23 vorgewölbt; generell besteht jedoch auch die Möglichkeit, einen im Wesentlichen entsprechend gestalteten Dichtring vorzusehen, mit einer Dichtmanschette 2, die entgegen dem abzudichtenden Raum 23 vorgewölbt ist. Unabhängig davon ist der Rückförderdrall 21 derart gestaltet, dass abzudichtendes Medium 22 in Richtung des abzudichtenden Raums 23 zurückgefördert wird.

Der Stützkörper 1 weist einen Axialflansch 4 und einen Radialflansch 5 auf, die im Wesentlichen rechtwinklig zueinander angeordnet sind, wobei der Axialflansch 4 im Wesentlichen zylindrisch ausgebildet ist und sich in axialer Richtung, parallel zur Einpress- und Ausbaurichtung 6 des Dichtrings erstreckt.

Der Axialflansch 4 weist außenumfangsseitig eine Vielzahl von Erhebungen 7, 7.1, 7.2, ... auf, wobei die Erhebungen 7, 7.1, 7.2, ... in zumindest zwei sich in Umfangsrichtung erstreckenden Reihen 13, 17 angeordnet sind.
Die Erhebungen 7, 7.1, 7.2, ... einer jeden Reihe 13, 17 sind gleichmäßig in Umfangsrichtung verteilt angeordnet, und die beiden Reihen 13, 17 sind in diesem Ausführungsbeispiel einander mit axialem Abstand 18 benachbart zugeordnet. Die beiden Reihen 13, 17 erstrecken sich jeweils entlang einer Umfangslinie 14, 19.
Die Erhebungen 7, 7.1, 7.2, ... der ersten und zweiten Reihe 13, 17 sind, in Umfangsrichtung des Axialflanschs 4 betrachtet, einander auf Lücke 20 zugeordnet.

Wesentlich sind die Stützflächen 8.1, 8.2 der jeweiligen der Erhebungen 7.1, 7.2, ..., die sich im Wesentlichen in radialer Richtung und quer zur Einpress- und Ausbaurichtung 6 erstrecken. Durch den sich im Wesentlichen in axialer Richtung parallel zur Einpress- und Ausbaurichtung 6 erstreckenden, zylindrisch ausgebildeten Axialflansch, ergibt sich bei Montage/Demontage des Dichtrings in die Bohrung 25 des Gehäuses 26 eine ausgezeichnete Abstützung des polymeren Werkstoffs, aus dem die Ummantelung 10 besteht und der die statische Dichtung 9 bildet, an den Stützflächen 8.1, 8.2. Auch bei harten Montagebedingungen, beispielsweise bei der Verwendung automatisch arbeitender Montagewerkzeuge, ist eine gegenseitige Trennung der Ummantelung 10 vom Axialflansch 4 durch die Anordnung und Ausgestaltung der Stützflächen 8.1, 8.2 nahezu ausgeschlossen. Weiter begünstigt wird die sichere Verbindung der Ummantelung 10 mit dem Axialflansch 4 dadurch, dass die Ummantelung 10 eine axiale Erstreckung 11 aufweist, die der axialen Erstreckung 12 des Axialflanschs 4 entspricht und diesen in axialer Richtung vollständig überdeckt.

Die statische Dichtung 9 besteht in dem hier gezeigten Ausführungsbeispiel aus einem polymeren Werkstoff.

In Figur 3 ist der Dichtring aus den Figuren 1 und 2 in der Seitenansicht gezeigt.

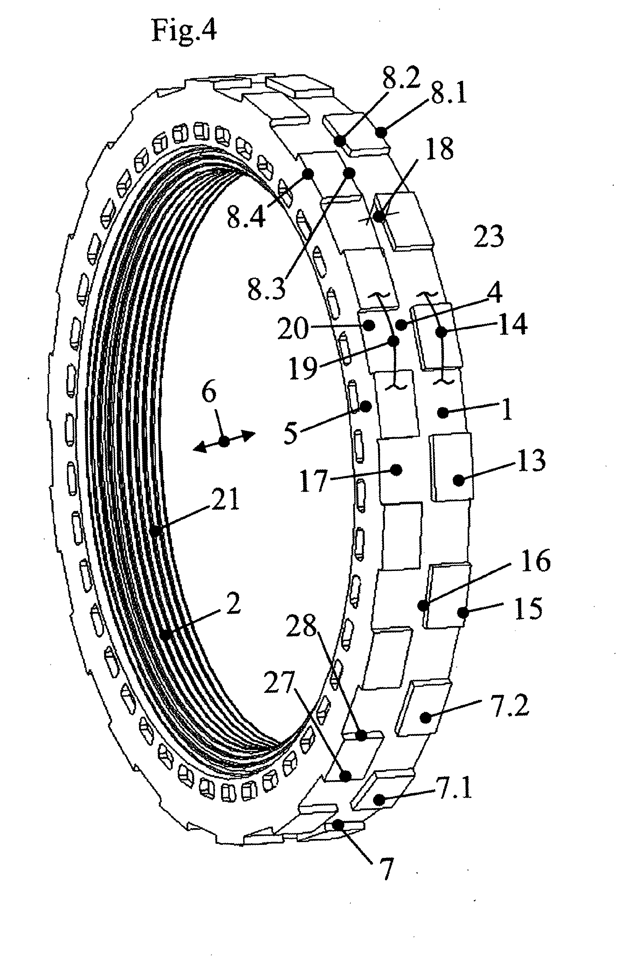

In Figur 4 sind Teile des Dichtrings aus den Figuren 1 und 2 in einer perspektivischen Darstellung gezeigt.

Zum besseren Verständnis fehlt auf dem Außenumfang des Axialflanschs 4 die als statische Dichtung 9 ausgebildete Ummantelung 10.

Die Erhebungen 7, 7.1, 7.2, ..., die außenumfangsseitig auf dem Axialflansch 4 angeordnet sind und sich in zwei Reihen 13, 17 entlang jeweils einer Umfangslinie 14, 19 erstrecken, weisen quer zur Einpress- und Ausbaurichtung 6 angeordnete Stützflächen 8.1, 8.2 auf, wobei jede Erhebung 7, 7.1, 7.2, ... in Umfangsrichtung des Axialflanschs 4 durch zwei Stirnflächen 27, 28 begrenzt ist.

Die Erhebungen 7, 7.1, 7.2, ... der ersten und zweiten Reihe 13, 17 sind, in Umfangsrichtung des Axialflanschs 4 betrachtet, einander auf Lücke 20 zugeordnet, wobei der axiale Abstand der beiden Reihen 13, 17 mit 18 bezeichnet ist.

## Patentansprüche

1. Dichtring, umfassend einen Stützkörper (1) und eine Dichtmanschette (2), die ein abzudichtendes Maschinenelement (3) dichtend umschließt, wobei der Stützkörper (1) und die Dichtmanschette (2) miteinander verbunden sind, wobei der Stützkörper (1) einen Axialflansch (4) umfasst, wobei der Axialflansch (4) im Wesentlichen zylindrisch ausgebildet ist und sich in axialer Richtung parallel zur Einpress- und Ausbaurichtung (6) des Dichtrings erstreckt und außenumfangsseitig zumindest eine Erhebung (7) aufweist, mit zumindest einer sich im Wesentlichen quer zur Einpress- und Ausbaurichtung (6) erstreckenden Stützfläche (8) und wobei die Erhebung (7) von einer als statische Dichtung (9) ausgebildeten Ummantelung (10) umschlossen ist, wobei , in axialer Richtung des Dichtrings betrachtet, zumindest zwei sich in Umfangsrichtung erstreckende Reihen (13, 17) mit jeweils zumindest einer Erhebung (7) auf dem Axialflansch angeordnet sind, wobei die beiden Reihen (13, 17) einander mit axialem Abstand (18) benachbart zugeordnet sind und wobei jede Reihe (13, 17) entlang jeweils einer Umfangslinie (14, 19) angeordnet ist, **dadurch gekennzeichnet, dass** in jeder Reihe (13, 17) mehrere in Umfangsrichtung benachbart zueinander angeordnete Erhebungen (7, 7.1, 7.2, ...) vorgesehen sind und dass die Erhebungen (7, 7.1, 7.2, ...) der ersten und zweiten Reihe (13, 17), in Umfangsrichtung des Axialflanschs (4) betrachtet, einander auf Lücke (20) zugeordnet sind.

2. Dichtring nach Anspruch 1, **dadurch gekennzeichnet, dass** die Ummantelung (10) eine axiale Erstreckung (11) aufweist, die der axialen Erstreckung (12) des Axialflanschs (4) entspricht und diesen in axialer Richtung vollständig überdeckt.

3. Dichtring nach einem der Ansprüche 1 bis 3, **dadurch gekennzeichnet, dass** die Erhebungen (7, 7.1, 7.2, ...) einer jeden Reihe (13, 17) gleichmäßig in Umfangsrichtung verteilt angeordnet sind.

4. Dichtring nach einem der Ansprüche 1 bis 3, **dadurch gekennzeichnet, dass** die Erhebungen (7, 7.1, 7.2, ...), in der Draufsicht des Dichtrings betrachtet, im Wesentlichen rechteckig ausgebildet sind und zwei einander in Einpress- und Ausbaurichtung (6) gegenüberliegend angeordnete Stirnseiten (15, 16) aufweisen, die jeweils als Stützfläche (8.1, 8.2) für die Ummantelung (10) ausgebildet sind.

5. Dichtring nach einem der Ansprüche 1 bis 4, **dadurch gekennzeichnet, dass** der Stützkörper (1) aus einem polymeren Werkstoff besteht.

6. Dichtring nach einem der Ansprüche 1 bis 5, **dadurch gekennzeichnet, dass** die Dichtmanschette (2) aus einem PTFE-Compound besteht.

7. Dichtring nach einem der Ansprüche 1 bis 6, **dadurch gekennzeichnet, dass** die Dichtmanschette (2) auf der dem Maschinenelement (3) radial zugewandten Seite einen Rückförderdrall (21) zur Rückförderung von abzudichtendem Medium (22) in Richtung des abzudichtenden Raums (23) aufweist.

## Claims

1. Sealing ring, comprising a supporting body (1) and a sealing cuff (2) which sealingly surrounds a machine element (3) to be sealed off, the supporting body (1) and the sealing cuff (2) being connected to one another, the supporting body (1) comprising an axial flange (4), the axial flange (4) being designed essentially cylindrically and extending in the axial direction parallel to the pressing-in and demounting direction (6) of the sealing ring and having at least one elevation (7) on the outer circumference, with at least one supporting surface (8) extending essentially transversely with respect to the pressing-in and demounting direction (6), and the elevation (7) being surrounded by a sheathing (10) designed as a static seal (9), at least two circumferentially extending rows (13, 17), each with at least one elevation (7), being arranged on the axial flange, as seen in the axial direction of the sealing ring, the two rows (13, 17) being assigned adjacently to one another with an axial clearance (18), and each row (13, 17) being arranged in each case along a circumferential line (14, 19), **characterized in that** a plurality of elevations (7, 7.1, 7.2, ...) arranged adjacently to one another in the circumferential direction are provided in each row (13, 17), and **in that** the elevations (7, 7.1, 7.2, ...) of the first and the second row (13, 17) are assigned to one another with stagger (20), as seen in the circumferential direction of the axial flange (4).

2. Sealing ring according to Claim 1, **characterized in that** the sheathing (10) has an axial extent (11) which corresponds to the axial extent (12) of the axial flange (4) and which completely covers the latter in the axial direction.

3. Sealing ring according to one of Claims 1 to 3, **characterized in that** the elevations (7, 7.1, 7.2, ...) of each row (13, 17) are arranged, distributed uniformly in the circumferential direction.

4. Sealing ring according to one of Claims 1 to 3, **characterized in that** the elevations (7, 7.1, 7.2, ...) are of essentially rectangular design, as seen in the top view of the sealing ring, and have two end faces (15, 16) which are arranged opposite one another in the pressing-in and demounting direction (6) and which are each designed as a supporting surface (8.1, 8.2) for the sheathing (10).

5. Sealing ring according to one of Claims 1 to 4, **characterized in that** the supporting body (1) consists of a polymeric material.

6. Sealing ring according to one of Claims 1 to 5, **characterized in that** the sealing cuff (2) consists of a PTFE compound.

7. Sealing ring according to one of Claims 1 to 6, **characterized in that** the sealing cuff (2) has, on the side radially facing the machine element (3), a return-conveyance twist (21) for the return conveyance of medium (22) to be sealed off in the direction of the space (23) to be sealed off.

## Revendications

1. Joint annulaire d'étanchéité, comprenant un corps d'appui (1) et un manchon d'étanchéité (2), qui enveloppe de manière étanche un élément de machine (3) à rendre étanche, dans lequel le corps d'appui (1) et le manchon d'étanchéité (2) sont reliés l'un à l'autre, dans lequel le corps d'appui (1) comprend une bride axiale (4), dans lequel la bride axiale (4) a une configuration essentiellement cylindrique et s'étend dans la direction axiale parallèlement à la direction d'enfoncement et de démontage (6) du joint annulaire d'étanchéité et présente du côté de la circonférence extérieure au moins une surélévation (7), avec au moins une surface d'appui (8) s'étendant essentiellement transversalement à la direction d'enfoncement et de démontage (6) et dans lequel la surélévation (7) est enveloppée par une gaine (10) configurée comme un joint d'étanchéité statique (9), dans lequel, vues dans la direction axiale du joint annulaire d'étanchéité, au moins deux rangées (13, 17) s'étendant dans la direction circonférentielle sont disposées avec respectivement au moins une surélévation (7) sur la bride axiale, dans lequel les deux rangées (13, 17) sont associées l'une à l'autre en adjacence à un espacement axial (18) et dans lequel chaque rangée (13, 17) est disposée le long d'une ligne circonférentielle (14, 19) respective, **caractérisé en ce que** dans chaque rangée (13, 17), plusieurs surélévations (7, 7.1, 7.2,...) disposées en adjacence les unes par rapport aux autres dans la direction circonférentielle sont prévues et **en ce que** les surélévations (7, 7.1, 7.2,...) de la première et la deuxième rangée (13, 17), vues dans la direction circonférentielle de la bride axiale (4) sont associées l'une à l'autre autour d'un espace vide (20).

2. Joint annulaire d'étanchéité selon la revendication 1, **caractérisé en ce que** la gaine (10) présente une extension (11) axiale, qui correspond à l'extension axiale (12) de la bride axiale (4) et recouvre complètement celle-ci dans la direction axiale.

3. Joint annulaire d'étanchéité selon une des revendications 1 à 3, **caractérisé en ce que** les surélévations (7, 7.1, 7.2,...) de chacune des rangées (13, 17) sont réparties uniformément dans la direction circonférentielle.

4. Joint annulaire d'étanchéité selon une des revendications 1 à 3, **caractérisé en ce que** les surélévations (7, 7.1, 7.2,...), vues en vue pardessus le joint annulaire d'étanchéité, ont une configuration essentiellement rectangulaire et présentent des côtés frontaux (15, 16) disposés de manière à se faire face dans la direction d'enfoncement et de démontage (6), qui sont respectivement configurés comme des surfaces d'appui (8.1, 8.2) pour la gaine (10).

5. Joint annulaire d'étanchéité selon une des revendications 1 à 4, **caractérisé en ce que** le corps d'appui (1) est constitué d'un matériau polymère.

6. Joint annulaire d'étanchéité selon une des revendications 1 à 5, **caractérisé en ce que** le manchon d'étanchéité (2) est constitué d'un composé de PTFE.

7. Joint annulaire d'étanchéité selon une des revendications 1 à 6, **caractérisé en ce que** le manchon d'étanchéité (2) présente sur le côté tourné radialement vers l'élément de machine (3) une giration de refoulement (21) pour refouler le milieu (22) à rendre étanche dans la direction de l'espace (23) à rendre étanche.
